# FASCICULE DE BREVET EUROPEEN

(11) **EP 1 926 107 B1**
(45) Date de publication et mention de la délivrance du brevet: **30.06.2010**
(21) Numéro de dépôt: 07121439.9
(22) Date de dépôt: 23.11.2007
(51) Int. Cl.: G21C 19/07, G21F 5/012

(54) **Dispositif de rangement pour le stockage et/ou le transport d'assemblages de combustible nucleaire**
Verstauungsvorrichtung zur Lagerung und/oder zum Transport von Kernbrennelementen
Storage device for storing and/or transporting nuclear fuel assemblies

(30) Priorité: 27.11.2006 FR 0655110
(43) Date de publication de la demande: 28.05.2008
(73) Titulaire: TN International, 78182 Montigny Le Bretonneux (FR)
(72) Inventeur: Andre, Régis, 75015 Paris (FR); Foussard, Guillaume, 78320 Le Mesnil Saint Denis (FR)
(74) Mandataire: Poulin, Gérard

(56) Documents cités:
- EP-A- 1 235 231
- WO-A-96/37896
- FR-A1- 2 872 955
- FR-A2- 2 650 113

## Description

### DOMAINE TECHNIQUE

La présente invention se rapporte de façon générale à un dispositif de rangement pour le stockage et/ou le transport d'assemblages de combustible nucléaire. Plus particulièrement mais non exclusivement, l'invention concerne un dispositif de rangement pour le transport et le stockage d'assemblages de combustible nucléaire irradiés. Ce type de dispositif, habituellement soumis à des températures élevées, peut nécessiter, pour les cas où les températures sont les plus élevées, des éléments en acier afin d'assurer une résistance mécanique globale satisfaisante.

L'invention se rapporte en outre à un conteneur comprenant un emballage dans lequel se situe un tel dispositif de rangement pour le stockage et/ou le transport d'assemblages de combustible nucléaire.

### ETAT DE LA TECHNIQUE ANTERIEURE

Classiquement, de tels dispositifs également appelés « panier » ou « râtelier » de rangement, sont de forme cylindrique de section sensiblement circulaire, et disposent d'une pluralité de logements adjacents chacun apte à recevoir un assemblage de combustible nucléaire.

Ce type de dispositif est conçu afin de pouvoir remplir simultanément quatre fonctions essentielles, qui vont être brièvement exposées ci-dessous.

Il s'agit en effet tout d'abord d'évacuer la chaleur dégagée par les assemblages de combustible irradiés. Cela nécessite l'utilisation d'un matériau présentant une conductivité thermique élevée, l'aluminium ou l'un de ses alliages étant généralement utilisé. Cette première fonction est donc dénommée fonction thermique.

La seconde fonction consiste à maintenir la sous-criticité du dispositif de rangement lorsque celui-ci est chargé d'assemblages de combustible nucléaire, à savoir de limiter de manière satisfaisante l'interaction neutronique entre les assemblages afin d'éviter tout emballement des réactions de fission. Ceci est essentiellement réalisé en incorporant dans la structure du panier de rangement des éléments chimiques absorbeurs de neutrons, dits éléments neutrophages, tels que le bore. Le matériau ainsi dopé en éléments neutrophages est appelé matériau neutrophage. Le maintien de la sous-criticité peut nécessiter de ménager des espaces susceptibles d'être remplis d'eau, par exemple à l'intérieur même des cloisons formant les logements du dispositif de rangement.

Par ailleurs, le maintien de la sous-criticité du dispositif de rangement, lorsque celui-ci est chargé d'assemblages de combustible nucléaire, nécessite également de faire en sorte que ce dispositif ait une résistance mécanique suffisante, cette fonction mécanique constituant alors la troisième fonction. En effet, une déformation trop importante de sa géométrie peut affecter de manière inacceptable l'interaction neutronique entre les assemblages, c'est-à-dire la criticité.

Il est à noter que la résistance mécanique du dispositif doit être compatible avec les exigences réglementaires de sûreté pour le transport/stockage de matières nucléaires, notamment en ce qui concerne les épreuves dites de chute libre sur cible indéformable. Ces épreuves de chute sont réalisées en orientant l'axe longitudinal de l'emballage, et donc du dispositif de rangement, soit de manière sensiblement perpendiculaire à la surface d'impact (on parle alors généralement de chute axiale ou verticale), soit de manière sensiblement parallèle à celle-ci (on parle alors généralement de chute latérale ou horizontale). A l'issue de ces épreuves, les éventuelles déformations du panier ne doivent pas nuire de manière inacceptable à la criticité, ce qui impose de disposer d'un panier aussi résistant mécaniquement que possible. Cela peut nécessiter, en particulier lorsque les températures atteintes par le panier sont élevées, l'utilisation d'éléments structurels fabriqués en acier en plus des éléments en aluminium, dont la résistance mécanique à haute température est souvent insuffisante.

Enfin, comme toutes les structures constituant l'emballage dans lequel est placé le dispositif de rangement, le panier lui-même participe à la protection radiologique vis-à-vis des neutrons et des rayonnements gamma, cette fonction de radioprotection constituant la quatrième fonction. De plus, il est noté que si l'aluminium et ses alliages, matériaux présentant une densité faible, participent principalement au blindage neutronique, les matériaux à densité élevée, comme l'acier, participent principalement au blindage gamma.

Il est également à noter que lors de la conception de tels dispositifs de rangement, des contraintes économiques sont également prises en compte. En effet, ce type de contraintes vise à accroître la charge utile d'un conteneur dont la masse maximale, lorsqu'il est chargé de combustible nucléaire, est limitée par les contraintes d'exploitation. L'objectif consiste par conséquent à proposer des solutions techniques permettant d'alléger au maximum l'emballage, d'une part, mais également le dispositif de rangement, d'autre part.

De l'art antérieur, on connaît plusieurs réalisations consistant à empiler et entrecroiser des éléments structurels à encoches, dans le but d'obtenir les logements adjacents du dispositif de rangement. A titre d'exemple, le document FR-A-2 872 955 décrit des ensembles structurels à encoches comportant chacun deux plats espacés réalisés dans un matériau neutrophage et de haute conductivité thermique, tel qu'un alliage d'aluminium comprenant du bore, ainsi qu'une structure intermédiaire en acier prenant globalement la forme d'une barre de section rectangulaire située entre les plats et en contact avec ceux-ci. De plus, comme cela est généralement le cas pour des ensembles structurels empilés et entrecroisés, la direction d'empilement de ces ensembles est parallèle à l'axe longitudinal du panier, impliquant ainsi que chaque structure intermédiaire en acier se trouve agencée sensiblement orthogonalement à ce même axe longitudinal du panier.

A cet égard, il a été constaté que la forme globale de barre de section rectangulaire retenue pour la structure intermédiaire en acier n'est pas une solution optimale pour procurer une résistance mécanique maximale au panier associé, principalement en ce qui concerne les épreuves de chute libre verticale et latérale. Cela s'explique notamment par le fait que ces structures intermédiaires en acier présentent un module d'inertie en flexion relativement faible pour une masse linéique donnée, ce qui est de nature à engendrer des contraintes et déformations importantes dans celles-ci tant en chute libre latérale qu'en chute libre verticale, plus particulièrement lorsqu'il est nécessaire de retenir en translation le dispositif de rangement de manière à ce que celui-ci n'impacte pas le couvercle de l'emballage.

Par ailleurs, les discontinuités longitudinales engendrées par l'empilement des structures intermédiaires en acier ne permettent pas de disposer d'une protection gamma optimisée au regard de la masse d'acier ajoutée.

### EXPOSÉ DE L'INVENTION

L'invention a donc pour but de proposer un dispositif de rangement pour le stockage et/ou le transport d'assemblages de combustible nucléaire, ce dispositif remédiant aux inconvénients mentionnés ci-dessus, relatifs aux réalisations de l'art antérieur.

Pour ce faire, l'invention a pour objet un dispositif de rangement pour le stockage et/ou le transport d'assemblages de combustible nucléaire, le dispositif comportant une pluralité de logements adjacents, chacun présentant une paroi latérale et étant apte à recevoir un assemblage de combustible nucléaire, les parois latérales étant réalisées au moins en partie à l'aide d'ensembles structurels à encoches empilés et entrecroisés, chaque ensemble structurel comprenant au moins un plat réalisé dans un premier matériau comprenant de l'aluminium, tel qu'un alliage d'aluminium. Selon l'invention, chaque ensemble structurel comporte en outre un élément de section tubulaire à l'intérieur duquel se trouve ledit au moins un plat, cet élément de section tubulaire étant réalisé dans un second matériau pris parmi les aciers et le titane et ses alliages.

Avantageusement, la fonction de tenue mécanique du dispositif de rangement est essentiellement assurée par les éléments de section tubulaire, qui, de par la nature du second matériau les constituant et de par leur forme spécifique, sont chacun capable d'offrir une rigidité mécanique très satisfaisante, permettant ainsi au conteneur associé de facilement satisfaire les exigences réglementaires de sûreté, principalement en ce qui concerne les épreuves de chute libre verticale et latérale, tout en respectant les limites de masse imposées par les contraintes d'exploitation. Cela s'explique notamment par le fait que ces éléments de section tubulaire, en acier ou en titane ou dans l'un de ses alliages, présentent un module d'inertie en flexion élevé pour une masse linéique donnée, assurant une limitation sensible des contraintes et déformations de celles-ci tant en chute libre latérale qu'en chute libre verticale. En effet, pour une masse linéique donnée, la résistance en flexion d'un élément de structure, par exemple en acier, se révèle optimale dans les deux cas de chute évoqués, si la matière le constituant est éloignée autant que possible des fibres neutres de l'élément en flexion, à savoir de ses deux axes de symétrie. En conséquence, la forme tubulaire retenue dans la présente invention constitue une forme optimale pour la structure en acier assurant l'essentiel de la résistance mécanique. Bien entendu, cette remarque est également applicable pour le cas où le second matériau choisi est du titane ou l'un de ses alliages, même si l'emploi de l'acier, et de préférence de l'acier inoxydable, reste préféré. Il est noté que cette optimisation est particulièrement avantageuse pour une application privilégiée de la présente invention dans laquelle le panier est arrêté en translation à distance du couvercle de l'emballage contenant ce même panier, dans la mesure où une telle configuration provoque de fortes contraintes en flexion sur les ensembles structurels à encoches, lors de la réalisation des chutes libres précitées.

Par ailleurs, la tenue mécanique du dispositif de rangement selon l'invention est également optimisée par le fait que chaque élément de section tubulaire s'étend préférentiellement sur toute l'épaisseur de la paroi latérale du logement d'assemblage qu'il définit, et non plus sur une portion intérieure seulement de cette épaisseur, comme cela était notamment rencontré dans le panier de rangement du document FR-A-2 872 955. Cette spécificité découle en particulier de la caractéristique selon laquelle chaque plat réalisé dans le premier matériau est situé à l'intérieur de son élément de section tubulaire en acier associé.

De plus, il est indiqué qu'un autre avantage découlant du fait que la partie extérieure de chaque ensemble structurel à encoches soit constituée par l'élément de section tubulaire en acier, réside dans la possibilité de former, à l'aide de ces éléments de section tubulaire empilés et entrecroisés, une structure en acier s'étendant de façon sensiblement continue sur toute la longueur du panier. Outre le fait que ces éléments de section tubulaire permettent de renforcer encore davantage la tenue mécanique du panier, la continuité de la structure en acier précitée offre un blindage très satisfaisant, en particulier vis-à-vis des rayons gamma.

D'autre part, le dispositif de rangement proposé dispose d'une conception peu complexe basée sur l'utilisation d'éléments peu coûteux à géométrie simple, et capables d'être facilement assemblés les uns aux autres. Par conséquent, le coût global du dispositif peut être diminué par rapport à ceux rencontrés antérieurement. A ce titre, il est indiqué que les liaisons mécaniques entre les éléments de section tubulaire empilés et entrecroisés étant réalisées à l'aide des encoches prévues à cet effet sur ces mêmes éléments de section tubulaire, il n'est avantageusement plus nécessaire de prévoir des pions de centrage entre les éléments en acier ou titane aux entrecroisements de ceux-ci, et/ou des vis entre les éléments en acier ou titane et les éléments neutrophages, comme cela était le cas dans les réalisations de l'art antérieur. Outre la facilité de montage qui en découle, cette suppression des pions de centrage et/ou des vis renforce avantageusement la tenue mécanique globale du panier de rangement, étant donné que les sections résistantes aux entrecroisements ne sont plus réduites.

En outre, il est noté que le dispositif selon l'invention présente une conception telle qu'il peut aisément remplir l'ensemble des quatre fonctions essentielles exposées précédemment, celle relevant de la tenue mécanique étant bien entendu principalement assurée par les éléments de section tubulaire en acier.

En effet, dans le cas préférentiel où le/les plats de chacun des ensembles structurels du dispositif sont réalisés dans un premier matériau comprenant de l'aluminium et un/des élément(s) neutrophage(s), comme par exemple un alliage d'aluminium et de bore, le transfert thermique est alors essentiellement assuré par la présence d'aluminium. Dans ce cas, le maintien de la sous-criticité du dispositif de rangement, lorsque celui-ci est chargé d'assemblages de combustible nucléaire, est alors garanti préférentiellement à l'aide du bore prévu dans les plats.

A cet égard, comme cela sera décrit ci-après, il est noté que l'espacement de deux plats prévu sur un même ensemble structurel permet de définir un espace susceptible d'être occupé par de l'eau, toujours dans le but de maintenir la sous-criticité du dispositif de rangement. Enfin, comme cela a été exposé ci-dessus, le blindage vis-à-vis des rayons gamma est assuré de manière très satisfaisante par la structure en acier s'étendant de façon sensiblement continue sur l'intégralité de la longueur du panier, le blindage neutronique étant quant à lui essentiellement assuré par la présence d'aluminium dans le premier matériau.

Il est noté que si le/les éléments neutrophages sont en effet préférentiellement prévus au sein du premier matériau constituant les plats, ils pourraient alternativement être prévus au sein du second matériau constituant les éléments de section tubulaire, voire prévus simultanément au sein des premier et second matériaux. Quoi qu'il en soit, ces éléments sont pris parmi le groupe constitué des éléments suivants: bore, gadolinium, hafnium, cadmium, indium, samarium et europium, un mélange de ces derniers étant bien entendu envisageable, sans sortir du cadre de l'invention.

De plus, comme évoqué précédemment, chaque logement présente une surface latérale le délimitant, cette surface latérale étant au moins partiellement constituée par les éléments de section tubulaire en acier des ensembles structurels à encoches formant la paroi latérale du logement.

De préférence, pour chaque ensemble structurel, l'élément de section tubulaire en acier s'étend entre un chant supérieur et un chant inférieur reliés entre eux par deux flancs latéraux, ledit au moins un plat étant glissé entre le chant supérieur et chant inférieur. En d'autres termes, les deux chants de chaque plat en matériau neutrophage sont destinés à faire respectivement face aux chants supérieur et inférieur, des jeux de fonctionnement étant prévus afin d'autoriser un montage de l'un dans l'autre par coulissement, et afin de pouvoir gérer la dilatation différentielle rencontrée du fait de la nature distincte des matériaux employés pour ces deux pièces glissées l'une dans l'autre.

Cette spécificité implique que la hauteur du plat en matériau neutrophage est sensiblement identique à la hauteur intérieure de son élément de section tubulaire associé, de sorte que ces plats peuvent conjointement former une structure en matériau neutrophage et à haute conductivité thermique s'étendant également de façon sensiblement continue sur l'intégralité de la longueur du panier. De ce fait, le maintien de la sous-criticité, le transfert thermique et le blindage neutronique sont assurés dans de bonnes conditions par ces plats, toujours en raison de la quasi-continuité obtenue le long des parois latérales des logements.

Selon un mode de réalisation préféré de la présente invention, ledit au moins un plat est constitué par un unique plat. Ainsi, on fait de préférence en sorte que ce dernier soit également glissé entre les deux flancs latéraux de l'élément de section tubulaire en acier. En d'autres termes, les deux faces latérales du plat en matériau neutrophage sont respectivement destinées à être en regard / vis-à-vis des faces intérieures des flancs latéraux de l'élément de section tubulaire, des jeux de fonctionnement étant également prévus afin d'autoriser le montage et de gérer la dilatation différentielle. Ce mode de réalisation préféré, dans lequel l'unique plat en matériau neutrophage occupe la quasi-totalité de l'espace intérieur défini par son élément de section tubulaire associé, est préférentiellement destiné à la constitution d'un panier de rangement pour assemblages de combustible de type REB (pour Réacteurs à Eau Bouillante), dans lequel les parois latérales des logements ne sont habituellement pas équipées de lames d'eau pour le maintien de la sous-criticité.

Selon un autre mode de réalisation préféré de la présente invention, ledit au moins un plat est constitué par deux plats espacés l'un de l'autre. A cet égard, il est noté que l'espacement entre les deux plats de chacun des ensembles structurels permet de définir des espaces susceptibles d'être occupés par de l'eau, toujours dans le but de maintenir la sous-criticité du dispositif de rangement, lorsque celui-ci est chargé d'assemblages de combustible nucléaire. Par conséquent, cet autre mode de réalisation est préférentiellement destiné à la constitution d'un panier de rangement pour assemblages de combustible de type REP (pour Réacteurs à Eau Pressurisée).

De manière préférentielle, les deux plats espacés font respectivement face aux faces intérieures des deux flancs latéraux de l'élément de section tubulaire en acier, ces plats pouvant respectivement être plaqués contre les faces intérieures des deux flancs latéraux, avec des jeux de fonctionnement néanmoins prévus afin d'autoriser le montage par coulissement de chaque plat dans l'élément de section tubulaire, et afin de gérer la dilatation différentielle.

Dans ce mode de réalisation préféré, on peut faire en sorte que les deux plats en matériau neutrophage soient totalement indépendants l'un de l'autre, ou bien intégrés au sein d'une structure de section en forme générale de H ou de tube, les deux plats constituant respectivement les deux flancs de ce H ou tube. Dans ce dernier cas, la structure de section en forme générale de H ou de tube peut être réalisée d'un seul tenant, ou bien obtenue à l'aide de pièces assemblées fixement les unes aux autres.

Toujours de manière préférentielle et pour chacun des deux modes de réalisation préférés mentionnés ci-dessus, au moins un ensemble structurel et de préférence chacun d'eux, dispose d'une partie supérieure pourvue d'encoches supérieures ainsi que d'une partie inférieure pourvue d'encoches inférieures, les encoches supérieures et inférieures présentant sensiblement la même hauteur. A titre indicatif, il est noté que les parties supérieure et inférieure indiquées ci-dessus sont bien entendu à considérer en fonction de la direction d'empilement des ensembles structurels. Ainsi, la partie supérieure se trouve au niveau du chant de l'élément de section tubulaire orienté vers la plaque de tête du dispositif de rangement, et la partie inférieure au niveau du chant opposé, à savoir celui orienté vers le fond du dispositif de rangement. D'une autre manière, cela revient à dire que la partie supérieure se trouve au niveau du chant de l'élément de section tubulaire orienté vers le couvercle de l'emballage associé au dispositif de rangement, et la partie inférieure au niveau du chant opposé, à savoir celui orienté vers le fond de l'emballage.

De préférence, pour obtenir une paroi latérale de logement quasi-continue le long de l'axe longitudinal du dispositif de rangement, la somme des hauteurs d'une encoche supérieure et d'une encoche inférieure est environ égale à la moitié de la hauteur de l'ensemble structurel.

Néanmoins, il est noté que l'on pourrait alternativement prévoir des ensembles structurels disposant uniquement d'encoches supérieures ou uniquement d'encoches inférieures, sans sortir du cadre de l'invention.

Dans ce cas préféré où les ensembles structurels disposent à la fois d'encoches supérieures et d'encoches inférieures, de hauteurs identiques, on fait en sorte que chacune des encoches supérieures et inférieures soit réalisée à l'aide d'une entaille pratiquée dans l'élément de section tubulaire en acier, et d'une entaille pratiquée dans chaque plat de l'ensemble structurel.

Alternativement, au moins un ensemble structurel et de préférence chacun d'eux, dispose d'une partie supérieure pourvue d'encoches supérieures ainsi que d'une partie inférieure pourvue d'encoches inférieures, les encoches supérieures présentant une hauteur plus faible que celle des encoches inférieures.

Dans cet autre cas, on peut indifféremment faire en sorte que chacune des encoches supérieures et inférieures soit réalisée à l'aide d'une entaille pratiquée dans l'élément de section tubulaire en acier et d'une entaille pratiquée dans chaque plat de l'ensemble structurel, ou que chacune des encoches inférieures soit toujours réalisée à l'aide d'une entaille pratiquée dans l'élément de section tubulaire en acier et d'une entaille pratiquée dans chaque plat de l'ensemble structurel, avec des encoches supérieures réalisées quant à elle uniquement à l'aide d'une entaille pratiquée dans l'élément de section tubulaire en acier.

Cette dernière configuration est tout particulièrement prévue pour renforcer la rigidité mécanique du dispositif de rangement en cas de chute libre verticale du conteneur visant à faire percuter la partie supérieure de ce dernier, équipée d'un système de fermeture tel qu'un couvercle, contre une surface d'impact, en particulier lorsque ce dispositif de rangement est prévu pour être bloqué en translation par rapport au corps latéral de l'emballage selon l'axe longitudinal de celui-ci, à distance du couvercle.

Effectivement, lors de l'impact suivant une telle chute libre verticale, les éléments de section tubulaire en acier arrêtés en translation à leurs extrémités, sont sollicités en flexion, la flèche s'établissant en direction du système de fermeture, à savoir vers la partie supérieure du conteneur alors orientée vars le bas. Cette flexion induit une fermeture des encoches inférieures des tubes et une ouverture des encoches supérieures. Etant donné que les tubes sont très ajustés aux entrecroisements, le jeu qu'il est nécessaire de combler pour que l'encoche se refermant vienne au contact du tube entrecroisé est très réduit. Lorsque la flexion se produit, l'encoche inférieure se refermant vient donc rapidement au contact du tube entrecroisé logé dans cette encoche, induisant ainsi une augmentation significative de la raideur dans la zone d'entrecroisement, et donc une diminution des contraintes et des déformations.

A noter que lorsque le dispositif de rangement n'est pas destiné à être retenu en translation, cas envisageable en particulier lorsque la tenue mécanique du système de fermeture est suffisante pour pouvoir retenir la masse du dispositif de rangement lors d'une chute avec impact du côté de ce système de fermeture, le dispositif de rangement impacte le couvercle sur toute sa section. Les ensembles structurels du dispositif de rangement sont dans ce cas pas ou peu sollicités en flexion, de sorte qu'il n'est alors pas nécessaire de prévoir des encoches de hauteurs différentes.

De préférence, l'élément de section tubulaire en acier de chaque ensemble structurel dispose d'une section sensiblement rectangulaire ou carrée.

Toujours de manière préférentielle, le dispositif de rangement comporte en outre une pluralité de cloisons périphériques agencées autour de l'empilement des ensembles structurels. A cet égard, il est de préférence fait en sorte que chaque ensemble structurel dispose de deux extrémités opposées chacune montée sur l'une de ladite pluralité de cloisons périphériques, de sorte qu'un jeu soit présent entre deux ensembles structurels quelconques directement consécutifs d'une même paroi latérale.

Ainsi, cet agencement particulier permet de dissocier le maintien de chacun des ensembles structurels, qui sont donc maintenus au niveau des cloisons périphériques indépendamment les uns des autres. Globalement, avec un tel agencement, la justification de la tenue mécanique de la totalité du panier en chute axiale, particulièrement lorsque le panier est arrêté en translation à distance du couvercle de l'emballage, peut alors avantageusement être apportée par la simple justification de la tenue mécanique de l'un quelconque des ensembles structurels de ce panier.

L'invention a également pour objet un conteneur pour le stockage et/ou le transport d'assemblages de combustible nucléaire, ce conteneur comprenant un emballage à l'intérieur duquel est logé un dispositif de rangement tel que décrit ci-dessus.

De préférence, l'emballage comprend un fond, un couvercle, ainsi qu'un corps latéral s'étendant autour d'un axe longitudinal de l'emballage confondu avec un axe longitudinal du dispositif de rangement, ce dispositif de rangement étant bloqué en translation à distance du couvercle par rapport au corps latéral de l'emballage, selon l'axe longitudinal de l'emballage, dans la direction de ce couvercle.

Cela permet d'éviter que le dispositif de rangement vienne impacter le couvercle de l'emballage lors d'une chute libre verticale, ce qui serait susceptible d'entraîner une rupture de l'étanchéité de l'emballage prévue au niveau de ce même couvercle.

Enfin, on prévoit que le blocage en translation du dispositif de rangement est effectué à l'aide de moyens de butée solidaires du corps latéral de l'emballage et coopérant avec des cloisons périphériques du dispositif de rangement, agencées autour de l'empilement des ensembles structurels. Dans un tel cas où les moyens de butée coopèrent de préférence uniquement avec les cloisons périphériques mais pas avec les ensembles structurels, il est noté que la forme tubulaire des éléments en acier est tout à fait appropriée pour procurer une résistance mécanique satisfaisante dans le cadre d'une chute libre verticale.

Néanmoins, il serait également possible de prévoir des moyens de butée prenant la forme d'une plaque dite « plaque de tête » rapportée solidairement sur l'emballage à distance du couvercle, plaque sur laquelle seraient en appui les ensembles structurels de la partie supérieure du panier de rangement, sans sortir du cadre de l'invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un dispositif de rangement pour le stockage et/ou le transport d'assemblages de combustible nucléaire, illustrant brièvement le principe de la présente invention ;
- la figure 2 représente une vue en coupe prise selon le plan P de la figure 1, le plan P étant perpendiculaire à une direction d'empilement des ensembles structurels à encoches du dispositif de rangement ;
- les figures 3a et 3b représentent des vues en perspective d'un ensemble structurel à encoches utilisé dans un dispositif de rangement pour le stockage et/ou le transport d'assemblages de combustible nucléaire selon un premier mode de réalisation préféré de la présente invention, la figure 3b étant une vue éclatée de la figure 3a ;
- la figure 3c représente une vue en coupe transversale de l'ensemble structurel à encoches montré sur les figures 3a et 3b, le plan de coupe passant par une section courante de l'ensemble structurel ;
- la figure 4 est une vue partielle en perspective du dispositif de rangement selon le premier mode de réalisation préféré, montrant une pluralité d'ensembles structurels à encoches empilés et entrecroisés, tels que ceux représentés sur les figures 3a à 3c ;
- les figures 5a et 5b représentent des vues en perspective d'un ensemble structurel à encoches utilisé dans un dispositif de rangement pour le stockage et/ou le transport d'assemblages de combustible nucléaire selon une alternative du premier mode de réalisation préféré de la présente invention, la figure 5b étant une vue éclatée de la figure 5a ;
- la figure 6a est une vue partielle en perspective du dispositif de rangement selon un second mode de réalisation préféré, montrant deux ensembles structurels à encoches empilés et entrecroisés ;
- la figure 6b représente une vue en coupe transversale de l'un des deux ensembles structurels à encoches montrés sur la figure 6a ;
- la figure 7 représente une vue schématique d'un conteneur intégrant un dispositif de rangement pour le stockage et/ou le transport d'assemblages de combustible nucléaire, tel que montré sur la figure 1 ; et
- les figures 8a et 8b montrent des vues en coupe illustrant le montage des ensembles structurels à encoches sur les cloisons périphériques du dispositif de rangement.

### EXPOSÉ DÉTAILLÉ DE MODES DE RÉALISATION PRÉFÉRÉS

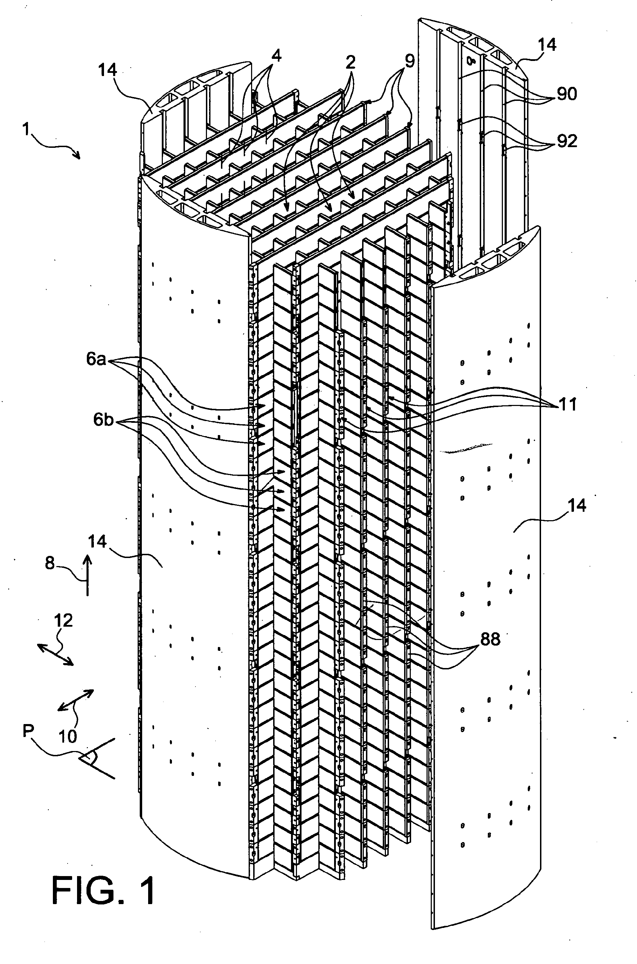

En référence à la figure 1, il est représenté un dispositif de rangement 1 prévu pour être placé dans un emballage (non représenté sur cette figure) destiné au transport et/ou stockage d'assemblages de combustible nucléaire (non représentés), de préférence irradiés.

Comme on peut le voir sur la figure 1, le dispositif de rangement 1 comprend une pluralité de logements adjacents 2 disposés parallèlement, ces derniers s'étendant chacun selon un axe longitudinal 4. Les logements 2 sont chacun apte à recevoir au moins un assemblage de combustible de section carrée, et de préférence un seul.

Les logements 2 sont donc prévus de manière à être juxtaposés les uns aux autres. Ils sont réalisés par l'intermédiaire d'une pluralité d'ensembles structurels 6a, 6b à encoches, ces ensembles 6a, 6b étant empilés selon une direction d'empilement qui est parallèle aux axes longitudinaux 4 des logements 2, comme le montre schématiquement la flèche 8 sur la figure 1. D'une façon plus précise, la direction d'empilement 8 s'étend à partir d'un fond de dispositif de rangement vers une plaque de fermeture de dispositif de rangement (non montrés). Par convention, dans la suite de la description, on admet que la notion de « hauteur » est à associer à la direction d'empilement 8, qui est également parallèle à un axe longitudinal (non représenté) du dispositif 1.

Comme on peut l'apercevoir sur cette même figure 1, les ensembles structurels à encoches 6a, 6b sont entrecroisés, de préférence de manière perpendiculaire. En d'autres termes, les ensembles 6a sont parallèles entre eux, tandis que les ensembles 6b sont également parallèles entre eux, mais perpendiculairement aux ensembles 6a.

Lorsqu'ils sont empilés selon la direction d'empilement 8, les ensembles structurels 6a, 6b forment conjointement la paroi latérale de chacun des logements 2, cette paroi latérale disposant dans ce mode de réalisation préféré d'une section transversale de forme sensiblement carrée. Bien entendu, la paroi latérale des logements 2 pourrait se présenter sous toutes autres formes autorisant le maintien d'un assemblage de combustible de forme différente, telle qu'une forme hexagonale.

Ainsi, dans l'exemple représenté sur la figure 1 où les logements 4 sont de section carrée, les ensembles structurels 6a forment des cloisons verticales 9 parallèles à une direction 10 et à la direction d'empilement 8, tandis que les ensembles structurels 6b forment des cloisons verticales 11 parallèles à une direction 12 et à la direction d'empilement 8, les directions 8, 10 et 12 étant perpendiculaires entre-elles.

De manière préférée, chacun des ensembles 6a, 6b s'étend entre deux cloisons périphériques 14 auxquelles il est solidarisé, ces cloisons périphériques 14 permettant de fermer latéralement le dispositif de rangement 1. A titre d'exemple indicatif et comme représenté, ces cloisons périphériques 14 peuvent être prévues au nombre de quatre, s'étendre chacune sur toute la hauteur du dispositif 1, et constituer une partie périphérique de la paroi latérale des logements périphériques 2 de ce dispositif 1. De plus, on peut alternativement prévoir que chaque cloison périphérique 14 soit réalisée par l'intermédiaire d'une pluralité de tronçons de cloison empilés selon la direction 8, sans sortir du cadre de l'invention.

Par ailleurs, il est noté que chacune des cloisons verticales 9, 11 participe à la formation d'une partie de la paroi latérale de plusieurs logements 2 situés de part et d'autre de la cloison verticale concernée.

Comme cela va être expliqué de manière détaillée ci-dessous, chacun des ensembles structurels à encoches 6a, 6b est conçu à l'aide d'un élément de section tubulaire, réalisé dans un second matériau, à l'intérieur duquel est logé au moins un plat réalisé dans un premier matériau. Le premier matériau est de préférence celui comprenant un/des éléments neutrophages, et prend donc préférentiellement la forme d'un alliage d'aluminium et de bore, même si d'autres éléments neutrophages pourraient être adoptés par l'homme du métier, tels que gadolinium, hafnium, cadmium, indium, samarium, europium, etc. Cependant, d'autres matériaux à base d'aluminium sont également envisageables pour constituer ce premier matériau, tel qu'un matériau composite constitué d'une matrice comprenant un alliage d'aluminium et de carbure de bore. D'autre part, le second matériau constitutif des éléments de section tubulaire est de préférence de l'acier, tel que de l'acier inoxydable, même si l'emploi du titane ou de ses alliages peut également être envisagé en raison des hautes performances en résistance mécanique qu'il est capable de procurer.

Ainsi, toujours en référence à la figure 1, on peut brièvement apercevoir que chacun des deux flancs latéraux d'un élément de section tubulaire en acier est parallèle à la direction d'empilement 8 ainsi qu'à l'une des directions 10, 12, et participe à la définition d'une pluralité de logements 2.

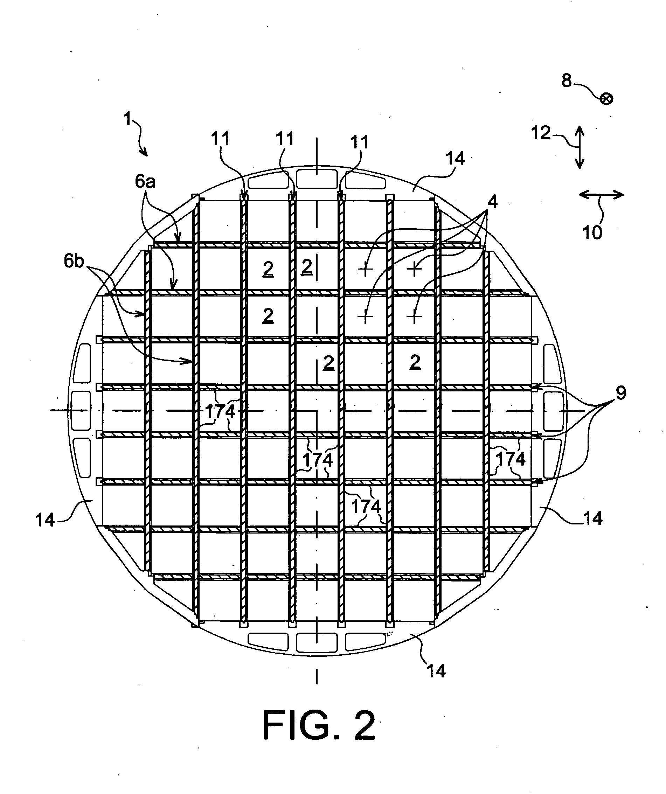

En référence à présent à la figure 2, on peut voir que les logements 2, dont la paroi latérale est formée par les cloisons verticales 9, 11, 14 sont chacun délimités intérieurement par une surface latérale 174, de section en forme de carré. On peut prévoir que cette surface latérale 174 est au moins partiellement constituée par les flancs latéraux des éléments de section tubulaire en acier des ensembles structurels 6a, 6b formant respectivement les cloisons verticales 9, 11.

Comme cela est clairement visible sur la figure 2, seule la surface latérale 174 des logements périphériques 2 n'est pas entièrement constituée par les flancs latéraux, puisqu'une partie de la surface latérale de chacun de ces logements périphériques 2 est dans ce cas également formée à l'aide d'une cloison périphérique 14.

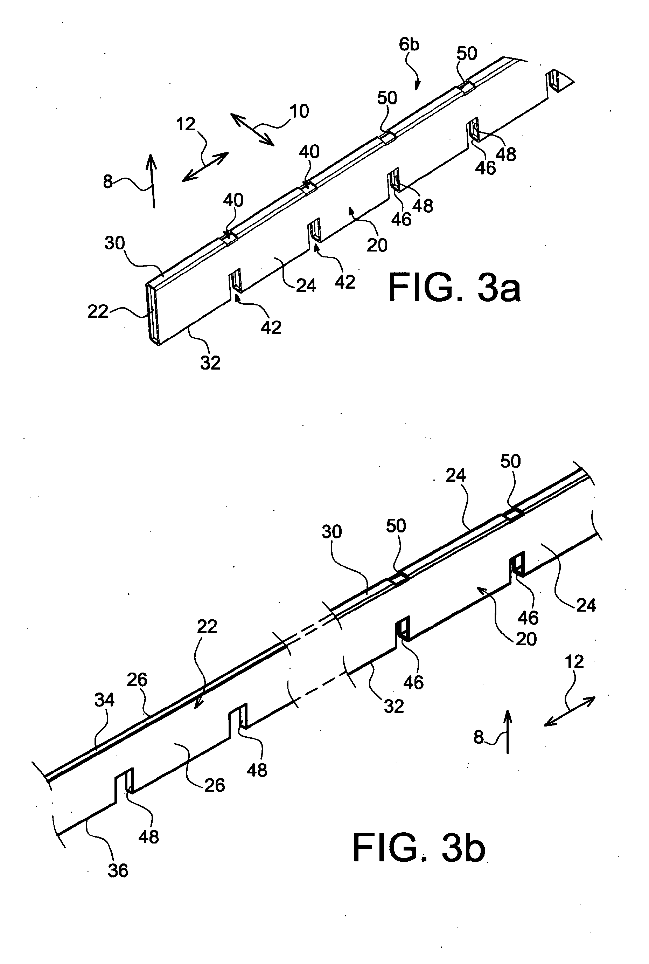

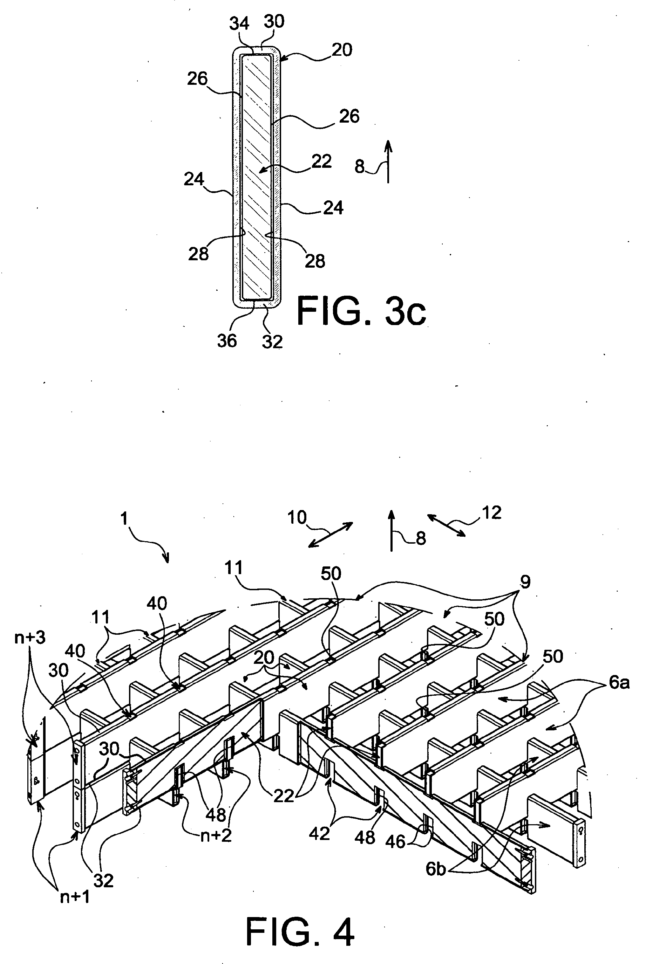

En référence à présent à la figure 4, on peut apercevoir une partie d'un dispositif de rangement 1 selon un premier mode de réalisation préféré de la présente invention, ce dispositif 1 étant réalisé à l'aide d'un empilement d'ensembles structurels à encoches 6a, 6b tels que celui représenté sur les figures 3a à 3c. A ce titre, il est noté que les ensembles 6a constituant les cloisons 9 sont identiques ou similaires aux ensembles 6b constituant les cloisons 11, et dont l'un d'entre eux va à présent être décrit en référence aux figures 3a à 3c.

Dans ce premier mode de réalisation préféré de la présente invention, l'ensemble structurel à encoches 6b est constitué d'un élément de section tubulaire 20 en acier inoxydable, à l'intérieur duquel se trouve un plat 22 en alliage d'aluminium et de bore. Comme cela est le mieux visible sur la figure 3c, le plat 22 dispose d'une forme sensiblement rectangulaire, complémentaire de celle définie intérieurement par l'élément 20, présentant donc également une section transversale sensiblement rectangulaire.

Dans ce premier mode de réalisation préféré, l'unique plat 22 est effectivement prévu pour être glissé entre les deux flancs latéraux 24 de l'élément de section tubulaire 22. Ainsi, les deux faces latérales 26 du plat 20 sont respectivement plaquées contre les faces intérieures 28 des flancs latéraux 24 de l'élément 20, des jeux de fonctionnement étant cependant prévus afin d'autoriser le montage et de gérer la dilatation différentielle.

D'autre part, l'élément de section tubulaire 20 s'étend entre un chant supérieur 30 et un chant inférieur 32 reliés entre eux par les deux flancs latéraux 24, le plat 22 étant donc également glissé entre les deux chants 30, 32. En d'autres termes, le chant supérieur 34 et le chant inférieur 36 du plat 22 sont respectivement plaqués contre les chant supérieur 30 et chant inférieur 32 de l'élément 20, des jeux de fonctionnement étant néanmoins prévus afin d'autoriser un montage de l'un dans l'autre par coulissement, et afin de pouvoir gérer la dilatation différentielle rencontrée du fait de la nature distincte des matériaux employés.

Par conséquent, on fait de préférence en sorte que la hauteur du plat 22 selon la direction 8 soit sensiblement identique à la hauteur intérieure de l'élément de section tubulaire 20, de sorte que ces plats peuvent conjointement former une structure en matériau neutrophage et à haute conductivité thermique s'étendant de façon sensiblement continue sur l'intégralité de la longueur du panier.

Ce premier mode de réalisation préféré, dans lequel l'unique plat 22 en matériau neutrophage occupe la quasi-totalité de l'espace intérieur défini par l'élément de section tubulaire 20, est préférentiellement destiné à la constitution d'un panier de rangement pour assemblages de combustible de type REB.

Comme cela est visible sur la figure 3a, l'ensemble structurel 6b dispose d'une partie supérieure pourvue d'encoches supérieures 40 ainsi que d'une partie inférieure pourvue d'encoches inférieures 42, les encoches supérieures 40 ayant la spécificité de présenter une hauteur selon la direction 8 qui est plus faible que celle des encoches inférieures 42.

A cet égard, il est de préférence fait en sorte que la somme des hauteurs d'une encoche supérieure 40 et d'une encoche inférieure 42 située en regard de cette dernière soit environ égale à la moitié de la hauteur de l'ensemble structurel 6b, de manière à obtenir des parois latérales sensiblement continues après empilement et entrecroisement des ensembles 6a, 6b.

Chacune des encoches inférieures 42 est réalisée à l'aide d'une entaille 46 pratiquée dans toute l'épaisseur de l'élément de section tubulaire 20, et d'une entaille 48 de hauteur sensiblement identique pratiquée dans toute l'épaisseur de l'unique plat 22.

Par conséquent, lorsque le plat 22, de préférence déjà muni de ses entailles 48, est coulissé/glissé à l'intérieur de l'élément tubulaire 20 également de préférence déjà muni de ses entailles 46, ces entailles 46, 48 coïncident alors deux à deux pour former les encoches inférieures 42 de l'ensemble 6b. A titre informatif, il est précisé que les entailles 48 pratiquées dans le premier matériau à base d'aluminium sont préférentiellement sensiblement plus larges dans la direction 12 que les entailles 46 pratiquées dans le second matériau constitué par de l'acier inoxydable, comme cela est d'ailleurs visible sur la figure 3a. Cette différence de largeur permet de gérer la dilatation différentielle suivant la direction 12 entre le premier et le second matériau de l'ensemble 6b.

En revanche, les encoches supérieures 40 sont quant à elles chacune réalisée uniquement à l'aide d'une unique entaille 50 pratiquée sur le chant supérieur 30 de l'élément de section tubulaire en acier 20, le chant 34 du plat 22 ne présentant donc aucune entaille et disposant de ce fait d'une section constante sur toute la longueur de l'ensemble structurel 6b.

Comme indiqué précédemment, cette configuration dans laquelle les encoches inférieures 42 sont plus importantes que les encoches supérieures 40 dans la direction d'empilement 8, est prévue pour renforcer la rigidité mécanique du panier en cas de chute libre verticale dans la direction 8. Effectivement, lors de l'impact suivant une telle chute libre verticale, les éléments 20 arrêtés en translation à leurs extrémités comme cela sera décrit ci-après, sont sollicités en flexion, la flèche s'établissant dans la direction 8, à savoir vers la partie supérieure du conteneur alors orientée vars le bas. Cette flexion induit alors une fermeture des entailles 46 et une ouverture des entailles 50 de plus petite dimensions. Etant donné que les éléments 20 sont préférentiellement très ajustés aux entrecroisements, le jeu qu'il est nécessaire de combler pour que l'entaille 46 se refermant vienne au contact de l'élément 20 entrecroisé est très réduit. Ainsi, lorsque la flexion se produit, l'entaille 46 se refermant vient rapidement au contact de l'élément 20 entrecroisé logé dans l'encoche 42 associée, induisant ainsi une augmentation significative de la raideur dans la zone d'entrecroisement.

Sur la figure 4 où une pluralité d'ensembles 6a, 6b sont empilés et entrecroisés, on note tout d'abord la présence d'une couche n+1 d'ensembles 6a parallèles les uns aux autres. En outre, une couche n+2 est située directement au-dessus de la couche n+1 dans la direction d'empilement 8, et est constituée d'ensembles 6b coopérant avec les ensembles 6a de la couche n+1, par l'intermédiaire des encoches 40, 42 prévues à cet effet. A ce titre, les ensembles 6b de la couche n+2 et les ensembles 6a de la couche n+1 sont donc agencés de manière directement consécutive dans la direction d'empilement 8, et sont disposés de façon croisée les uns par rapport aux autres.

Enfin, une couche n+3 est située directement au-dessus de la couche n+2 dans la direction d'empilement 8, et est constituée d'ensembles 6a coopérant avec les ensembles 6b de la couche n+2, par l'intermédiaire des encoches 40, 42. Les ensembles 6b de la couche n+2 et les ensembles 6a de la couche n+3 sont par conséquent agencés de manière directement consécutive dans la direction d'empilement 8, et sont disposés de façon croisée les uns par rapport aux autres. D'autre part, comme cela est visible sur la figure 4, les ensembles structurels 6a des couches n+1 et n+3 sont très rapprochés ou en contact deux à deux au niveau des chants 30, 32 des éléments tubulaires 20.

D'une façon plus générale, il est indiqué que chaque encoche supérieure 40 de hauteur plus faible est destinée à coopérer avec une encoche inférieure 42 d'un ensemble structurel adjacent, et inversement.

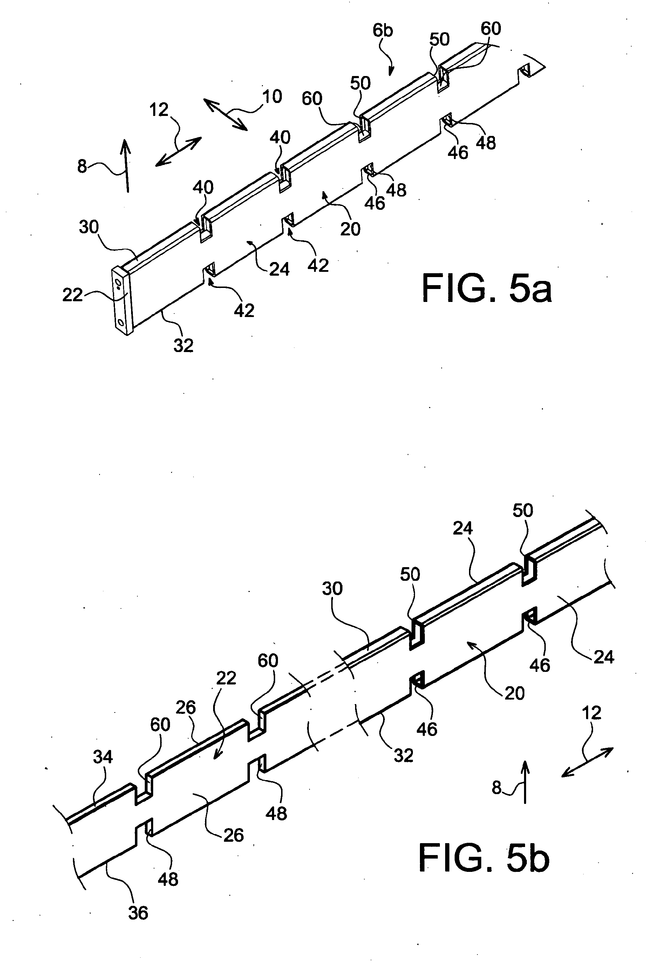

En référence à présent aux figures 5a à 5b, on peut voir une alternative de ce premier mode de réalisation préféré, de conception grandement similaire à celle qui vient d'être décrite. A ce titre, et ce pour l'ensemble des figures, les éléments portant les mêmes références numériques correspondent à des éléments identiques ou similaires.

Ainsi, on peut voir que dans cette alternative, la principale modification réside dans le fait que les encoches supérieures 40 et inférieures 42 disposent à présent de la même hauteur selon la direction 8, la somme des hauteurs étant toujours prévue pour être environ égale à la moitié de la hauteur de l'ensemble structurel 6b.

Pour ce faire, chaque encoche supérieure 40 ne peut plus être réalisée uniquement à l'aide d'une seule entaille 50 sur le chant supérieur 30 de l'élément 20, mais est à présent obtenue également à l'aide d'une entaille supérieure 60 prévue sur le chant 34 du plat 22, coïncidant avec cette même entaille 50 comme montré sur la figure 5a. Par conséquent, dans cette alternative, les encoches supérieures 40 et inférieures 42 sont obtenues d'une manière similaire.

Par ailleurs, à titre indicatif, la coupe transversale de cet ensemble en section courante est identique à celle montrée sur la figure 3c.

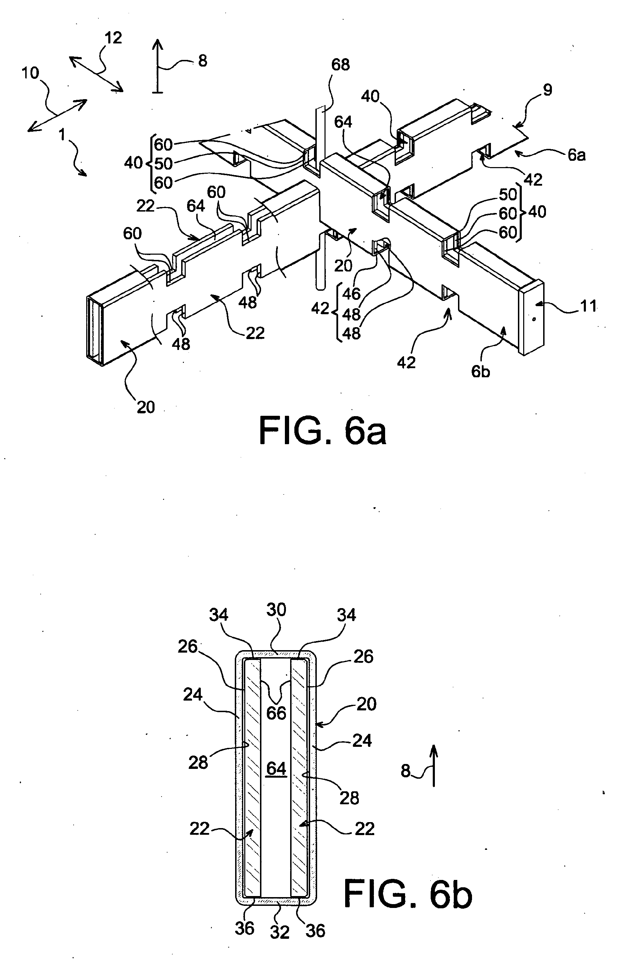

Dans un second mode de réalisation préféré montré sur les figures 6a et 6b, les ensembles structurels 6a, 6b présentent une configuration d'encoches supérieures et inférieures 40, 42 sensiblement similaire à celle décrite pour l'alternative ci-dessus, bien qu'elle pourrait alternativement être du type de celle montrée sur les figures 3a à 3c. Le second mode de réalisation préféré se distingue donc du premier par le fait qu'il n'intègre non plus un unique plat en premier matériau occupant la quasi-totalité de l'espace défini par l'élément 20 associé, mais deux plats 22 distincts espacés l'un de l'autre.

Plus précisément, l'espacement entre les deux plats 22 permet de définir un espace 64 susceptible d'être occupé par de l'eau, dans le but de maintenir la sous-criticité du dispositif de rangement, lorsque celui-ci est chargé d'assemblages de combustible nucléaire. Par conséquent, ce second mode de réalisation est préférentiellement destiné à la constitution d'un panier de rangement pour assemblages de combustible de type REP.

Comme cela est le mieux visible sur la figure 6b, les deux plats identiques 22 sont chacun prévus pour être glissé entre les chants supérieur 30 et inférieur 32 de l'élément en acier 20 les contenant. D'autre part, les deux plats identiques 22 disposent chacun d'une face latérale extérieure 26 faisant respectivement face aux deux faces intérieures 28 des flancs latéraux 24 de l'élément 20, des jeux de fonctionnement étant prévus afin d'autoriser le montage et de gérer la dilatation différentielle. Les faces latérales intérieures 66 des deux plats 22, opposées aux faces latérales extérieures 26, se font face et délimitent conjointement avec les chants supérieur 30 et inférieur 32 de l'élément en acier 20, un espace 64 pouvant être occupé par de l'eau.

Ici encore, bien que l'épaisseur de chacun des deux plats 22 soit largement inférieure à l'épaisseur de l'élément tubulaire 20, la hauteur de chacun de ces plats 22 selon la direction 8 est toujours sensiblement identique à la hauteur intérieure de l'élément 20.

Comme montré sur la figure 6a, chaque encoche supérieure 40 est alors formée par deux entailles supérieures 60 respectivement pratiquées sur le chant supérieur 34 des deux plats 22, ainsi que d'une entaille supérieure 50 pratiquée sur le chant supérieur 30 de l'élément tubulaire 20, ces entailles 50, 60, 60 coïncidant bien entendu entre-elles. De la même façon, chaque encoche inférieure 42 est alors formée par deux entailles inférieures 48 respectivement pratiquées sur le chant inférieur 36 des deux plats 22, ainsi que d'une entaille inférieure 46 pratiquée sur le chant inférieur 32 de l'élément tubulaire 20, ces entailles 46, 48, 48 coïncidant entre-elles.

Enfin, il est indiqué que des cales d'espacement 68 des deux plats 22, prenant par exemple chacune la forme d'une tige parallèle à la direction 8, peuvent être placées au niveau des encoches 40, 42 du dispositif 1. Par conséquent, il est fait en sorte que la somme du diamètre des cales 68 et des épaisseurs des deux plats 22 soit sensiblement identique à la distance intérieure entre les deux flancs latéraux 24 de l'élément de section tubulaire 20.

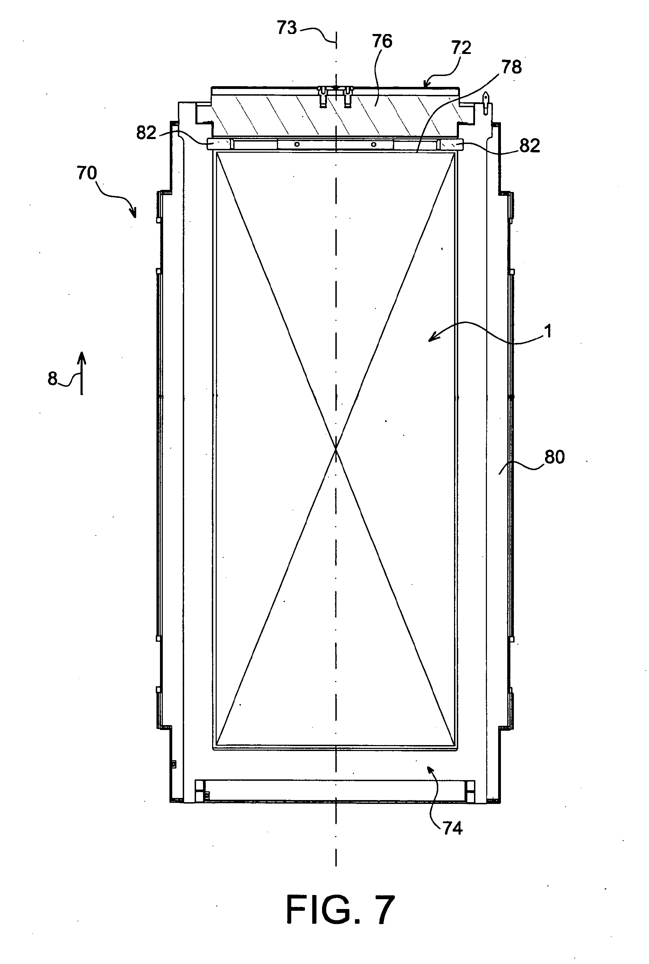

En référence à la figure 7, on voit un conteneur 70 comprenant globalement un emballage 72 à l'intérieur duquel se trouve un dispositif 1 de rangement tel que l'un de ceux qui viennent d'être décrits ci-dessus, et prévu pour être placé dans un emballage, ce dispositif 1 étant uniquement représenté schématiquement sur la figure 7.

De façon connue de l'homme du métier, l'emballage 72 d'axe longitudinal 73 parallèle à la direction d'empilement 8 comprend un fond 74 sur lequel repose le dispositif 1, ainsi qu'un couvercle 76 fermant cet emballage et disposé à distance de l'extrémité supérieure 78 du dispositif 1. Il comporte aussi un corps latéral 80 s'étendant autour de l'axe longitudinal 73 confondu avec l'axe longitudinal du dispositif 1.

Par ailleurs, de manière préférentielle, le dispositif de rangement 1 est bloqué en translation selon l'axe 73 et dans la direction 8, par rapport au corps latéral 80, à distance du couvercle 76. Ainsi, cela permet d'éviter que le dispositif 1 vienne impacter le couvercle 76 lors d'une chute libre verticale avec ce même couvercle 76 orienté vers le bas, ce qui serait susceptible d'entraîner une rupture de l'étanchéité de l'emballage 70 prévue au niveau de ce couvercle.

Pour obtenir ce blocage en translation du panier 1 à distance du couvercle 76, on prévoit des moyens de butée prenant la forme d'éléments d'arrêt 82 logés dans une partie supérieure du corps latéral 80, et faisant saillie radialement vers l'intérieur de l'emballage. Comme visible sur la figure 7, l'extrémité supérieure 78 du panier 1 vient en appui contre ces éléments 82 lors d'une chute libre. Plus précisément, on fait en sorte que les éléments 82 coopèrent uniquement avec les cloisons périphériques du dispositif de rangement, agencées autour de l'empilement des ensembles structurels.

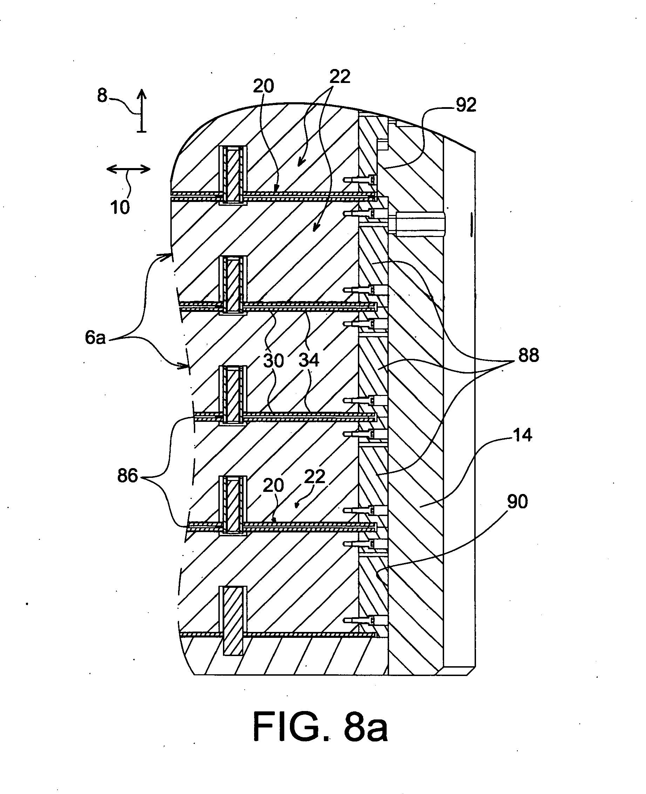

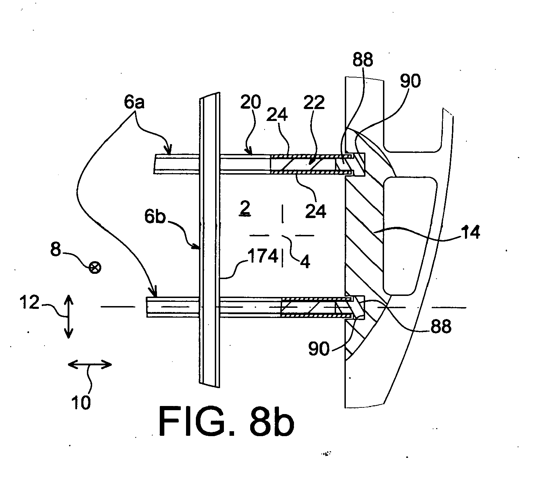

D'autre part, sur les figures 1, 8a et 8b, on peut voir un exemple de réalisation préféré pour le montage des ensembles structurels 6a, 6b sur les cloisons périphériques 14.

D'une façon générale, on fait en sorte que chaque ensemble structurel 6a, 6b dispose de deux extrémités opposées chacune montée sur une cloison périphérique 14, de manière à ce qu'un jeu 86 soit présent entre deux ensembles structurels quelconques directement consécutifs, comme visible sur la figure 8a.

Pour ce faire, chaque extrémité d'ensemble structurel est équipée d'un élément d'assemblage 88 dit taquet, qui pénètre à l'intérieur de l'élément de section tubulaire 20 jusqu'à venir au contact du plat 22 sur lequel il est solidarisé, par exemple par vissage. La partie du taquet 88 faisant saillie à l'extérieur de l'ensemble structurel est logée dans une rainure longitudinale 90 pratiquée sur une face intérieure de la cloison périphérique 14 considérée, la hauteur des taquets 88 selon la direction 8 étant donc prévue de manière à faire apparaître le jeu 86 entre les éléments tubulaires 20, lorsque ces taquets sont en contact les uns avec les autres dans la rainure longitudinale 90, comme cela est le mieux visible sur la figure 8a.

Les jeux 86 obtenus permettent de dissocier le maintien de chacun des ensembles structurels, qui sont donc maintenus au niveau des cloisons périphériques 14 indépendamment les uns des autres. La justification de la tenue mécanique de la totalité du panier 1 en chute axiale peut alors être apportée par la simple justification de la tenue mécanique de l'un quelconque des ensembles structurels de ce panier 1.

A titre indicatif, on peut prévoir que chaque rainure longitudinale 90 présente des arrêts 92 sur chacun desquels une série de taquets 88, située entre deux arrêts 92 directement consécutifs, est susceptible de venir en appui lors d'une chute libre verticale du conteneur. Cela permet de limiter les efforts de compression transitant dans les taquets 88 à des valeurs acceptables.

Bien entendu, diverses modifications peuvent être apportées par l'homme du métier aux dispositifs de rangement 1 et au conteneur qui viennent d'être décrits, uniquement à titre d'exemples non limitatifs.

## Revendications

1. Dispositif (1) de rangement pour le stockage et/ou le transport d'assemblages de combustible nucléaire, ledit dispositif comportant une pluralité de logements adjacents (2), chacun présentant une paroi latérale et étant apte à recevoir un assemblage de combustible nucléaire, lesdites parois latérales étant réalisées au moins en partie à l'aide d'ensembles structurels à encoches (6a, 6b) entrecroisés et empilés, chaque ensemble structurel comprenant au moins un plat (22) réalisé dans un premier matériau comprenant de l'aluminium, **caractérisé en ce que** chaque ensemble structurel (6a, 6b) comporte en outre un élément de section tubulaire (20) à l'intérieur duquel se trouve ledit au moins un plat (22), cet élément de section tubulaire (20) étant réalisé dans un second matériau pris parmi les aciers et le titane et ses alliages.

2. Dispositif (1) de rangement selon la revendication 1, **caractérisé en ce qu'**au moins l'un desdits premier et second matériaux comprend un/des élément(s) neutrophage(s).

3. Dispositif (1) de rangement selon la revendication 2, **caractérisé en ce que** ledit premier matériau à partir duquel est réalisé chaque plat comprend de l'aluminium et un/des élément(s) neutrophage(s).

4. Dispositif (1) de rangement selon la revendication 2 ou la revendication 3, **caractérisé en ce que** ledit / lesdits éléments neutrophages sont pris parmi le groupe constitué des éléments suivants : bore, gadolinium, hafnium, cadmium, indium, samarium et europium.

5. Dispositif (1) de rangement selon l'une quelconque des revendications précédentes, **caractérisé en ce que** chaque logement (2) présente une surface latérale (174) le délimitant, ladite surface latérale étant au moins partiellement constituée par lesdits éléments de section tubulaire (20) des ensembles structurels à encoches (6a, 6b) formant la paroi latérale du logement.

6. Dispositif (1) de rangement selon l'une quelconque des revendications précédentes, **caractérisé en ce que** pour chaque ensemble structurel (6a, 6b), ledit élément de section tubulaire (20) s'étend entre un chant supérieur (30) et un chant inférieur (32) reliés entre eux par deux flancs latéraux (24), ledit au moins un plat (22) étant glissé entre lesdits chant supérieur et chant inférieur (30, 32).

7. Dispositif (1) de rangement selon la revendication 6, **caractérisé en ce que** ledit au moins un plat (22) est constitué par un unique plat.

8. Dispositif (1) de rangement selon la revendication 7, **caractérisé en ce que** ledit unique plat (22) est également glissé entre lesdits deux flancs latéraux (24) dudit élément de section tubulaire en acier (20).

9. Dispositif (1) de rangement selon la revendication 6, **caractérisé en ce que** ledit au moins un plat est constitué par deux plats (22, 22) espacés l'un de l'autre.

10. Dispositif (1) de rangement selon la revendication 9, **caractérisé en ce que** lesdits deux plats (22, 22) espacés font respectivement face aux faces intérieures (26) desdits deux flancs latéraux (24) dudit élément de section tubulaire en acier (20).

11. Dispositif (1) de rangement selon l'une quelconque des revendications précédentes, **caractérisé en ce qu'**au moins un ensemble structurel (6a, 6b) dispose d'une partie supérieure pourvue d'encoches supérieures (40) ainsi que d'une partie inférieure pourvue d'encoches inférieures (42), les encoches supérieures et inférieures (40, 42) présentant sensiblement la même hauteur.

12. Dispositif (1) de rangement selon la revendication 11, **caractérisé en ce que** chacune des encoches supérieures et inférieures (40, 42) est réalisée à l'aide d'une entaille (50, 46) pratiquée dans ledit élément de section tubulaire (20), et d'une entaille (60, 48) pratiquée dans chaque plat (22) dudit ensemble structurel (6a, 6b).

13. Dispositif (1) de rangement selon l'une quelconque des revendications précédentes, **caractérisé en ce qu'**au moins un ensemble structurel (6a, 6b) dispose d'une partie supérieure pourvue d'encoches supérieures (40) ainsi que d'une partie inférieure pourvue d'encoches inférieures (42), les encoches supérieures (40) présentant une hauteur plus faible que celle des encoches inférieures (42).

14. Dispositif (1) de rangement selon la revendication 13, **caractérisé en ce que** chacune des encoches supérieures et inférieures (40, 42) est réalisée à l'aide d'une entaille (50, 46) pratiquée dans ledit élément de section tubulaire (20), et d'une entaille (60, 48) pratiquée dans chaque plat (22) dudit ensemble structurel (6a, 6b).

15. Dispositif (1) de rangement selon la revendication 13, **caractérisé en ce que** chacune des encoches inférieures (42) est réalisée à l'aide d'une entaille (46) pratiquée dans ledit élément de section tubulaire (20), et d'une entaille (48) pratiquée dans chaque plat (22) dudit ensemble structurel, et **en ce que** chacune des encoches supérieures (42) est réalisée uniquement à l'aide d'une entaille (50) pratiquée dans ledit élément de section tubulaire (20).

16. Dispositif (1) de rangement selon l'une quelconque des revendications précédentes, **caractérisé en ce que** ledit élément de section tubulaire (20) de chaque ensemble structurel (6a, 6b) dispose d'une section sensiblement rectangulaire ou carrée.

17. Dispositif (1) de rangement selon l'une quelconque des revendications précédentes, **caractérisé en ce qu'**il comporte en outre une pluralité de cloisons périphériques (14) agencées autour de l'empilement des ensembles structurels (6a, 6b).

18. Dispositif (1) de rangement selon la revendication 17, **caractérisé en ce que** chaque ensemble structurel (6a, 6b) dispose de deux extrémités opposées chacune montée sur l'une des cloisons périphériques (14), de sorte qu'un jeu (86) soit présent entre deux ensembles structurels (6a, 6b) quelconques directement consécutifs d'une même paroi latérale.

19. Conteneur (70) pour le stockage et/ou le transport d'assemblages de combustible nucléaire, ledit conteneur comprenant un emballage (72) à l'intérieur duquel est logé un dispositif (1) de rangement selon l'une quelconque des revendications précédentes.

20. Conteneur (70) selon la revendication 19, **caractérisé en ce que** ledit emballage (72) comprend un fond (74), un couvercle (76), ainsi qu'un corps latéral (80) s'étendant autour d'un axe longitudinal de l'emballage (73) confondu avec un axe longitudinal dudit dispositif de rangement, ledit dispositif de rangement étant bloqué en translation à distance dudit couvercle (76) par rapport au corps latéral de l'emballage (80), selon l'axe longitudinal de l'emballage (73), dans la direction dudit couvercle (76).

21. Conteneur (70) selon la revendication 20, **caractérisé en ce que** le blocage en translation est effectué à l'aide de moyens de butée (82) solidaires du corps latéral de l'emballage (80) et coopérant avec des cloisons périphériques (14) du dispositif de rangement (1), agencées autour de l'empilement des ensembles structurels (6a, 6b).

## Claims

1. Storage device (1) for the storing and/or transporting of nuclear fuel assemblies, said device including a plurality of adjacent housings (2), each having a lateral wall and being able to receive a nuclear fuel assembly, said lateral walls being realised at least in part using stacking and intercrossing slotted structural assemblies (6a, 6b), each structural assembly including at least one plate (22) realised in a first material comprising aluminium, **characterised in that** each structural assembly (6a, 6b) further comprises a tubular cross-section element (20) inside which is located said at least one plate (22), this tubular cross-section element (20) being realised in a second material selected from steels and titanium and alloys thereof.

2. Storage device (1) according to claim 1, **characterised in that** at least one of said first and second materials comprises a neutrophage element(s).

3. Storage device (1) according to claim 2, **characterised in that** said first material from which is realised each plate comprising aluminium and a neutrophage element(s).

4. Storage device (1) according to claim 2 or in claim 3, **characterised in that** said neutrophage element(s) are selected from the group consisting of the following elements: boron, gadolinium, hafnium, cadmium, indium, samarium and europium.

5. Storage device (1) according to any of the preceding claims, **characterised in that** each housing (2) has a lateral surface (174) delimiting it, said lateral surface being at least partially constituted by said tubular cross-section elements (20) of slotted structural assemblies (6a, 6b) forming the lateral wall of the housing.

6. Storage device (1) according to any of the preceding claims, **characterised in that** for each structural assembly (6a, 6b), said tubular cross-section element (20) extends between an upper edge (30) and a lower edge (32) interconnected by lateral flanks (24), said at least one plate (22) being slid between said upper edge and lower edge (30, 32).

7. Storage device (1) according to claim 6, **characterised in that** said at least one plate (22) is constituted by a single plate.

8. Storage device (1) according to claim 7, **characterised in that** said single plate (22) is also slid between said two lateral flanks (24) of said steel tubular cross-section element (20).

9. Storage device (1) according to claim 6, **characterised in that** said at least one plate is constituted by two plates (22, 22) spaced one in relation to the other.

10. Storage device (1) according to claim 9, **characterised in that** said two spaced plates (22, 22) respectively face the interior sides (26) of said two lateral flanks (24) of said steel tubular cross-section element (20).

11. Storage device (1) according to any of the preceding claims, **characterised in that** at least one structural assembly (6a, 6b) has an upper portion provided with upper slots (40) as well as a lower portion provided with lower slots (42), upper and lower slots (40, 42) substantially presenting the same height.

12. Storage device (1) according to claim 11, **characterised in that** each of the upper and lower slots (40, 42) is realised using a notch (50, 46) formed in said tubular cross-section element (20), and a notch (60, 48) formed in each plate (22) of said structural assembly (6a, 6b).

13. Storage device (1) according to any of the preceding claims, **characterised in that** at least one structural assembly (6a, 6b) has an upper portion provided with upper slots (40) as well as a lower portion provided with lower slots (42), with the upper slots (40) having a height that is lower than that of lower slots (42).

14. Storage device (1) according to claim 13, **characterised in that** each of the upper and lower slots (40, 42) is realised using a notch (50, 46) formed in said tubular cross-section element (20), and a notch (60, 48) formed in each plate (22) of said structural assembly (6a, 6b).

15. Storage device (1) according to claim 13, **characterised in that** each of the lower slots (42) is realised using a notch (46) formed in said tubular cross-section element (20), and a notch (48) formed in each plate (22) of said structural assembly, and **in that** each of the upper slots (42) is realised solely using a notch (50) formed in said tubular cross-section element (20).

16. Storage device (1) according to any of the preceding claims, **characterised in that** said tubular cross-section element (20) of each structural assembly (6a, 6b) has a substantially rectangular or square cross-section.

17. Storage device (1) according to any of the preceding claims, **characterised in that** it further includes a plurality of perimeter walls (14) arranged around the stack of structural assemblies (6a, 6b).

18. Storage device (1) according to claim 17, **characterised in that** each structural assembly (6a, 6b) has two opposite ends each mounted on one of said perimeter walls (14), such that a clearance (86) is present between any two directly consecutive structural assemblies (6a, 6b) of a same lateral wall.

19. Container (70) for the storing and/or transporting of nuclear fuel assemblies, said contained including a casing (72) inside of which is housed a storage device (1) as claimed in any of the preceding claims.

20. Container (70) according to claim 19, **characterised in that** said casing (72) includes a base (74), a lid (76), as well as a lateral body (80) extending around a longitudinal axis of casing (73) merged with a longitudinal axis of said storage device, said storage device being locked in translation at a distance from staid lid (76) in relation to lateral body of casing (80), along the longitudinal axis of casing (73), in the direction of said lid (76).

21. Container (70) according to claim 20, **characterised in that** the locking in translation is carried out using stop means (82) attached to lateral body of casing (80) and cooperating with perimeter walls (14) of storage device (1), arranged around the stack of structural assemblies (6a, 6b).

## Patentansprüche

1. Aufbewahrungsvorrichtung (1) für die Lagerung und/oder den Transport von Kernbrennstoffverbunden, welche Vorrichtung eine Mehrzahl von benachbarten Aufnahmen (2) umfaßt, die jeweils eine Seitenwand aufweisen und dazu ausgelegt sind, einen Kernbrennstoffverbund aufzunehmen, wobei die Seitenwände wenigstens teilweise mit Hilfe von verflochtenen und gestapelten Strukturgruppen mit Aussparungen (6a, 6b) realisiert sind, wobei jede Strukturgruppe wenigstens eine Platte (22) umfaßt, die aus einem ersten Material hergestellt ist, das Aluminium enthält, **dadurch gekennzeichnet, dass** jede Strukturgruppe (6a, 6b) ferner ein Element mit röhrenförmigem Querschnitt (20) umfaßt, in dessen Innerem sich die wenigstens eine Platte (22) befindet, wobei dieses Element mit röhrenförmigem Querschnitt (20) aus einem zweiten Material hergestellt ist, das ausgewählt ist aus den Stählen und Titan und seinen Legierungen.

2. Aufbewahrungsvorrichtung (1) nach Anspruch 1, **dadurch gekennzeichnet, dass** das erste und/oder das zweite Material ein/mehrere neutrofage(s) Element(e) umfaßt.

3. Aufbewahrungsvorrichtung (1) nach Anspruch 2, **dadurch gekennzeichnet, dass** das erste Material, ausgehend von dem jede Platte hergestellt ist, Aluminium sowie ein/mehrere neutrofage(s) Element(e) umfaßt.

4. Aufbewahrungsvorrichtung (1) nach Anspruch 2 oder Anspruch 3, **dadurch gekennzeichnet, dass** das/die neutrofage(n) Element(e) ausgewählt ist/sind aus der Gruppe, die gebildet ist durch die folgenden Elemente: Bor, Gadolinium, Hafnium, Kadmium, Indium, Samarium und Europium.

5. Aufbewahrungsvorrichtung (1) nach einem der vorhergehenden Anspruche, **dadurch gekennzeichnet, dass** jede Aufnahme (2) eine sie begrenzende seitliche Fläche (174) aufweist, wobei die seitliche Fläche wenigstens teilweise gebildet ist durch die Elemente mit röhrenförmigem Querschnitt (20) der Strukturgruppen mit Aussparungen (6a, 6b), die die seitliche Wand der Aufnahme bilden.

6. Aufbewahrungsvorrichtung (1) nach einem der vorhergehenden Ansprüche, **dadurch gekennzeichnet, dass** sich das Element mit röhrenförmigem Querschnitt (20) für jede Strukturgruppe (6a, 6b) zwischen einer oberen Kante (30) und einer unteren Kante (32) erstreckt, die durch zwei seitliche Flanken (24) miteinander verbunden sind, wobei die wenigstens eine Platte (22) zwischen die obere Kante und die untere Kante (30, 32) gesteckt ist.

7. Aufbewahrungsvorrichtung (1) nach Anspruch 6, **dadurch gekennzeichnet, dass** die wenigstens eine Platte (22) durch eine einzelne Platte gebildet ist.

8. Aufbewahrungsvorrichtung (1) nach Anspruch 7, **dadurch gekennzeichnet, dass** die einzelne Platte (22) ebenfalls zwischen die zwei seitlichen Flanken (24) des Elements mit röhrenförmigem Querschnitt aus Stahl (20) gesteckt ist.

9. Aufbewahrungsvorrichtung (1) nach Anspruch 6, **dadurch gekennzeichnet, dass** die wenigstens eine Platte durch zwei voneinander beabstandete Platten (22, 22) gebildet ist.

10. Aufbewahrungsvorrichtung (1) nach Anspruch 9, **dadurch gekennzeichnet, dass** die zwei beabstandeten Platten (22, 22) jeweils den Innenseiten (26) der zwei seitlichen Flanken (24) des Elements mit röhrenförmigem Querschnitt aus Stahl (20) gegenüberliegen.

11. Aufbewahrungsvorrichtung (1) nach einem der vorhergehenden Ansprüche, **dadurch gekennzeichnet, dass** wenigstens eine Strukturgruppe (6a, 6b) über einen oberen Teil verfügt, der mit oberen Aussparungen (40) versehen ist, sowie über einen unteren Teil, der mit unteren Aussparungen (42) versehen ist, wobei die oberen und unteren Aussparungen (40, 42) im wesentliche die gleiche Höhe aufweisen.

12. Aufbewahrungsvorrichtung (1) nach Anspruch 11, **dadurch gekennzeichnet, dass** jede der oberen und unteren Aussparungen (40, 42) mit Hilfe einer Einkerbung (50, 46) realisiert ist, die in dem Element mit röhrenförmigem Querschnitt (20) vorgesehen ist, sowie einer Einkerbung (60, 48), die in jeder Platte (22) der Strukturgruppe (6a, 6b) vorgesehen ist.

13. Aufbewahrungsvorrichtung (1) nach einem der vorhergehenden Ansprüche, **dadurch gekennzeichnet, dass** wenigstens eine Strukturgruppe (6a, 6b) über einen oberen Teil verfügt, der mit oberen Aussparungen (40) versehen ist, sowie über einen unteren Teil, der mit unteren Aussparungen (42) versehen ist, wobei die oberen Aussparungen (40) eine Höhe aufweisen, die kleiner ist als jene der unteren Aussparungen (42).

14. Aufbewahrungsvorrichtung (1) nach Anspruch 13, **dadurch gekennzeichnet, dass** jede der oberen und unteren Aussparungen (40, 42) mit Hilfe einer Einkerbung (50, 46) realisiert ist, die in dem Element mit röhrenförmigem Querschnitt (20) vorgesehen ist, sowie einer Einkerbung (60, 48), die in jeder Platte (22) der Strukturgruppe (6a, 6b) vorgesehen ist.

15. Aufbewahrungsvorrichtung (1) nach Anspruch 13, **dadurch gekennzeichnet, dass** jede der unteren Aussparungen (42) mit Hilfe einer Einkerbung (46) realisiert ist, die in dem Element mit röhrenförmigem Querschnitt (20) vorgesehen ist, sowie einer Einkerbung (48), die in jeder Platte (22) der Strukturgruppe vorgesehen ist, und dass jede der oberen Aussparungen (42) ausschließlich mit Hilfe einer Einkerbung (50) realisiert ist, die in dem Element mit röhrenförmigem Querschnitt (20) vorgesehen ist.

16. Aufbewahrungsvorrichtung (1) nach einem der vorhergehenden Ansprüche, **dadurch gekennzeichnet, dass** das Element mit röhrenförmigem Querschnitt (20) jeder Strukturgruppe (6a, 6b) über einen im wesentlichen rechteckigen oder quadratischen Querschnitt verfügt.

17. Aufbewahrungsvorrichtung (1) nach einem der vorhergehenden Anspruche, **dadurch gekennzeichnet, dass** sie ferner eine Mehrzahl von Umfangswänden (14) umfaßt, die um den Stapel von Strukturgruppen (6a, 6b) herum angeordnet sind.

18. Aufbewahrungsvorrichtung (1) nach Anspruch 17, **dadurch gekennzeichnet, dass** jede Strukturgruppe (6a, 6b) über zwei entgegengesetzte Enden verfügt, von denen jedes an einer der Umfangswände (14) montiert ist, derart, dass ein Spiel (86) vorhanden ist zwischen zwei beliebigen Strukturgruppen (6a, 6b), die direkt aufeinander folgen bei der gleichen Seitenwand.

19. Behälter (70) für die Lagerung und/oder den Transport von Kernbrennstoffverbunden, welcher Behälter eine Verpackung (72) umfaßt, innerhalb derer eine Aufbewahrungsvorrichtung (1) nach einem der vorhergehenden Ansprüche aufgenommen ist.

20. Behälter (70) nach Anspruch 19, **dadurch gekennzeichnet, dass** die Verpackung (72) einen Boden (74), einen Deckel (76) sowie einen Seitenkörper (80) umfaßt, der sich um eine Längsachse der Verpackung (73) herum erstreckt, welche mit einer Längsachse der Aufbewahrungsvorrichtung zusammenfällt, wobei die Aufbewahrungsvorrichtung im Abstand vom Deckel (76) gegen eine Verschiebung bezüglich des Seitenkörpers der Verpackung (80) entlang der Längsachse der Verpackung (73) in der Richtung des Deckels (76) blockiert ist.

21. Behälter (70) nach Anspruch 20, **dadurch gekennzeichnet, dass** die Blockierung gegen eine Verschiebung mit Hilfe von Anschlagmitteln (82) bewirkt wird, die mit dem Seitenkörper der Verpackung (80) verbunden sind und mit Umfangswänden (14) der Aufbewahrungsvorrichtung (1) zusammenwirken, die um den Stapel von Strukturgruppen (6a, 6b) herum angeordnet sind.
